# EUROPÄISCHE PATENTSCHRIFT

(11) **EP 0 566 016 B1**
(45) Veröffentlichungstag und Bekanntmachung des Hinweises auf die Patenterteilung: **13.11.1996**
(21) Anmeldenummer: 93105750.9
(22) Anmeldetag: 07.04.1993
(51) Int. Cl.: C08G 77/10

(54) **Kontinuierliches Verfahren zur Herstellung von Polyorganosiloxanen**
Continuous process for the preparation of polyorganosiloxanes
Procédé en continu de préparation de polyorganosiloxanes

(30) Priorität: 16.04.1992 DE 4212754
(43) Veröffentlichungstag der Anmeldung: 20.10.1993
(73) Patentinhaber: Hüls Silicone Gesellschaft mit beschränkter Haftung, 01612 Nünchritz (DE)
(72) Erfinder: Pieschnick, Wolf, Dipl.-Chem., O-8403 Nünchritz (DE); Schickmann, Harald, Dipl.-Chem., O-8250 Meissen (DE); Behnisch, Dieter, Dipl.-Ing., O-8019 Dresden (DE)
(74) Vertreter: Zöllner, Gudrun

(56) Entgegenhaltungen:
- DE-A- 2 229 514
- DE-A- 2 705 563
- US-A- 3 853 934
- CHEMICAL ABSTRACTS, vol. 114, no. 1 Columbus, Ohio, US; abstract no. 6816q ; & JP-A-2 200 689
- CHEMICAL ABSTRACTS, vol. 83, nr 10, Columbus, Ohio, US, abstract no. 80062y.
- DATABASE WPI Section Ch, Week 7511, Derwent Publications Ltd., London, GB; Class C11, AN 75-18633 ; & JP-B-50 004 399

## Beschreibung

Dier vorliegende Erfindung betrifft ein kontinuierliches Verfahren zur Herstellung von Polyorganosiloxanen durch Umsetzung, vorzugsweise durch Kondensation, von niedermolekularen Polyorganosiloxanolen miteinander oder mit oligomeren Siloxanen in Gegenwart eines bekannten Katalysatorsystems. Diese Produkte sind Siliconöle und Siliconkautschukpolymere bzw. Ausgangsstoffe für weitere Modifikationen.

Bei der Hydrolyse von Organochlorsilanen bilden sich oligomere Siloxane mit sowohl cyclischer als auch linearer oder vernetzter Struktur. Beispielsweise entstehen bei der Hydrolyse von Diorganodichlorsilan Gemische aus Diorganocylosiloxanen und linearen α,ω-Dihydroxypolydiorqanosiloxanen.
Die Gemische oder deren Bestandteile werden in Abhängigkeit vom Anwendungszweck zu höhermolekularen linearen und/oder vernetzten Polyorganosiloxanen umgesetzt. Die Art der Umsetzung läßt sich durch die eingesetzten Rohstoffe, das verwendete Katalysatorsystem sowie die Prozeßparameter Druck und Temperatur beeinflussen.

Diese Reaktionen werden diskontinuierlich in Rührreaktoren, deren Mischwirkung durch den Einsatz von Spiralrührern (DE 17 70 048) oder Dissolverrührern verbessert wurde, durchgeführt; der Nachteil besteht in langen Reaktionszeiten von 1 bis 5 Stunden.
Die Entwicklung tendiert zu kontinuierlichen Verfahren. Hier sind u. a. der aus mehreren übereinander angeordneten Zellen bestehende Zellarreaktor (DE 27 05 563) und der Rohrreaktor (DE 34 39 543), in dem vorwiegend heterogene Katalysatoren eingesetzt werden, beschrieben.

Die Entwicklung entsprechender technischer Ausrüstungen hatte u. a. auch das Ziel, den Anteil an flüchtigen Bestandteilen, wie z. B. an cyclischen Polysiloxanen, zurückzudrängen sowie gegebenenfalls gleichzeitig gebildetes Kondensationswasser zu entfernen. Durch die Einführung der Schneckenkneter, wie z. B. der Ko-Kneter oder Einschneckenkneter bzw. Doppelschneckenextruder (DE 1.719.321, DE 2.229 514, DE 3.914.912), für o. g. Verfahren können auf Grund effektiverer Entgasungsmöglichkeiten sowie eines besseren Stoff- und Wärmeaustausches Verweilzeiten von 2 bis 13 Minuten erreicht werden.

Die bekannten Verfahren zur kontinuierlichen Herstellung von Polyorganosiloxanen weisen folgende Nachteile auf:
- ungenügende Verdampfungsbedingungen durch ein schlechtes Oberflächen-Volumen-Verhältnis des Reaktionsgemisches
- häufiges Schäumen des Reaktionsgemisches durch zu geringes Gasvolumen im Verhältnis zur Menge des Reaktionsgemisches im Reaktionsraum
- breite Molekulargewichtsverteilungen, im Extremfall Bildung von Gelteilchen, durch ein breites Verweilzeitspektrum, welches bedingt wird durch Ablagerungen in nichtumströmten Teilen des Reaktionsraumes
- große Mengen an uneinheitlichen, nicht direkt verwertbaren Produkten mit Zwischenviskositäten auf Grund der nur langsamen Verdrängung hochviskoser Produkte bei der Umstellung von hohen auf niedrige Zielviskositäten
- unterschiedliche Füllgrade im Reaktionsraum bedingen Verweilzeitschwankungen, damit ein Abweichen von der Zielviskosität, und führen zu unterschiedlichen Viskositäten bei den meisten der beschriebenen kontinuierlichen Verfahren
- Rückvermischungen durch ungenügende Sperrung der Förderorgane bei der Herstellung von Produkten mit niedrigen Viskositäten führen zu uneinheitlichen Polymeren

Aufgabe der vorliegenden Erfindung war es, ein kontinuierliches Verfahren für die Herstellung von Polyorganosiloxanen einer Viskosität von 0,2 bis 10 000 Pas (bei 20 °C) durch Reaktion von niedermolekularen Polyorganosiloxanolen miteinander oder mit oligomeren Siloxanen in Gegenwart bekannter Katalysatoren zu entwickeln, bei dem die genannten Nachteile herkömmlicher Methoden vermindert bzw. umgangen werden können. Insbesondere sollten bei hoher Effektivität des Verfahrens durch milde Reaktionsbedingungen die thermische Belastung der Produkte sowie Nebenreaktionen verhindert werden.

Erfindungsgemäß wird das Verfahren zur Herstellung von Polyorganosiloxanen einer Viskosität von 0,2 bis 10 000 Pas (bei 20 °C) durch Reaktion von durch Hydrolyse von Organochlorsilanen erhaltenen oligomeren Siloxanolen mit linearer oder vernetzter Struktur, bevorzugt von linearen, niedermolekularen Polyorganosiloxanolen miteinander oder mit oligomeren Siloxanen, in Gegenwart eines für diese Reaktion bekannten Katalysatorsystems bei Temperaturen zwischen 80 und 200 °C und Drücken von 1 bis 1000 mbar (abs.) in einem Dünnschichtverdampfer durchgeführt, wobei durch das Ausgangsprodukt eingebrachte und/oder bei der Reaktion entstehende flüchtige Produkte entfernt werden.

Als Katalysatoren können beispielsweise bekannte basische oder saure Verbindungen, wie Alkalihydroxide, Alkalisiloxanolate, quarternäre Oniumsalze, Säuren, Phosphorstickstoffhalogenide sowie deren Lösungen oder Reaktionsprodukte verwendet werden. Zur Endblockierung werden Verbindungen der allgemeinen Formel R'(SiR₂O)ₙSiR₂R'eingesetzt, wobei R gleiche oder verschiedene einwertige SiC-gebundene organische Reste oder Wasserstoff, R' entweder gleichbedeutend mit R ist oder Hydroxylgruppen oder einen einwertigen ungesättigten organischen Rest mit zwei bis vier C-Atomen darstellt, wobei an jedes Siliciumatom, an das Wasserstoff unmittelbar gebunden ist, auch ein einwertiger SiC-gebundener organischer Rest gebunden ist, und n eine ganze Zahl zwischen 1 und 50 ist.

Werden niedermolekulare Polyorganosiloxanole miteinander zur Reaktion gebracht, kommen insbesondere Kaliumhydroxid bei Reaktionstemperaturen bis 150 °C, vorzugsweise bei 100 bis 130 °C, und Phosphornitrilchlorid bei Reaktionstemperaturen bis 200 °C, vorzugsweise bei 100 bis 160 °C, als Katalysatoren zur Anwendung. Erfolgt die Reaktion von niedermolekularen Polyorganosiloxanolen mit oligomeren Siloxanen wird als Katalysator Phosphornitrilchlorid bevorzugt, wobei die Reaktionstemperaturen weniger als 200 °C, bevorzugt 100 bis 160 °C, betragen. Phosphornitrilchlorid kann z. B. durch Reaktion aus Phosphorpentachlorid und Ammoniumchlorid gemäß US-PS 38 39 388 hergestellt werden; eingesetzt wird es größtenteils gelöst in chlorierten Kohlenwasserstoffen, wie z. B. Methylenchlorid.

In der Siliconchemie wird der Dünnschichtverdampfer üblicherweise als Entflüchtigungsaggregat zum Abtrennen von Verunreinigungen, wie zur Abtrennung von cyclischen Verbindungen, die in vorgelagerten Reaktionen, z. B. bei der Herstellung von α,ω-Dihydroxypolydiorganosiloxanen, entstehen, eingesetzt. Es war überraschend, daß der Dünnschichtverdampfer erfindungsgemäß hervorragend als Reaktionsapparatur, speziell für die Umsetzung niedermolekularer Polyorganosiloxanole zu Siliconölen und Siliconkautschuken, einsetzbar ist.

Für das erfindungsgemäße Verfahren sind alle handelsüblichen Dünnschichtverdampfer geeignet.
Der Dünnschichtverdampfer besteht aus einem temperierbaren zylindrischen oder konischen Teil und einer Haube zur Abscheidung der unter destillativen Reaktionsbedingungen mitgerissenen Tröpfchen. Das Reaktionsgemisch wird vor dem Heiz/Kühlmantel eingespeist und mittels Verteilerring und den auf dem Rotor angebrachten Flügeln gleichmäßig als dünner Film auf der temperierten Wandung ausgebreitet. Während der Reaktion, bei der die durch die Ausgangsprodukte eingebrachten und/oder die bei der Reaktion entstehenden flüchtigen Produkte bei Temperaturen zwischen 80 und 200 °C und Drücken von 1 bis 1000 mbar (abs.) destillativ abgesaugt werden, wird das Produkt spiralförmig an der temperierten Wandung zum Austrag gefördert. Nach einer Verweilzeit, die entsprechend Verdampfergröße, Rotor sowie Dosierleistung und weiteren technischen Bedingungen, wie z.B. horizontale oder vertikale Anordnung des Dünnschichtverdampfers, Drehzahl, Rotorgestaltung, Größe der Heizfläche, zwischen 0,2 und 30 Minuten variiert werden kann, erreicht das Produkt das Ende des Verdampfers und wird ausgetragen. Die Neutralisation oder Desaktivierung des Katalysators erfolgt entweder im unteren Drittel des Dünnschichtverdampfers oder in einem nachgeschalteten Prozeß.

Die Verweilzeit der Produkte im Dünnschichtverdampfer beträgt 0,2 bis 30 Minuten, vorzugsweise 0,3 bis 3 Minuten.
Es ist möglich, die Prozeßparameter Druck, Temperatur, Katalysatorkonzentration und Durchsatz zu variieren. Besonders vorteilhaft ist es, den Prozeßparameter Druck mit Hilfe eines kontinuierlich messenden Prozeßviskosimeters zu regeln und somit die gewünschte Endviskosität konstant zu halten.

Die erfindungsgemäße Verfahrensweise bietet gegenüber den bekannten herkömmlichen Verfahren folgende Vorteile:
- sehr niedriger Gehalt an flüchtigen Bestandteilen im Produkt
- große Einheitlichkeit (enge Molekulargewichtsverteilung)
- bessere Raum-Zeit-Ausbeuten durch kürzere Verweilzeiten infolge besserer Entflüchtigungsbedingungen für Reaktionsprodukte (z.B. Kondensationswasser)
- sehr gute Beherrschbarkeit des Prozesses (Füllstand, Schäumen, Stabilität, Anfahren, Abfahren)
- Rückvermischungen und damit verbundene unterschiedliche Molekulargewichtsverteilungen werden ausgeschlossen
- keine Qualitätseinschränkungen durch Geleeteilchen (bedingt durch abgelagerte Produkte auf nichtumströmten Anlagenteilen)
- Möglichkeit der nahezu trägheitslosen Regelung des Prozesses mit dem Ziel der Variation der Endproduktviskosität ist über die Beeinflussung der verschiedenen Prozeßparameter (z.B. Druck) über ein Prozeßviskosimeter gegeben.

Besonders hervorzuhebende Vorteile sind
- mildere Reaktionsbedingungen, welche die thermische Belastung der Produkte verringern und eine Recyclisierung verhindern
   sowie die
- Verminderung des Anfalls von Zwischenfraktionen bei Produktumstellungen durch geringe Mengen des Reaktionsgemisches im Reaktionsraum und gute Entleerungsmöglichkeiten.

### Ausführungsbeispiele

### Beispiel 1 bis 4

In einem Dünnschichtverdampfer mit einer temperierbaren Fläche von 0,5 m² wurde kontinuierlich ein α,ω-Dihydroxypolydimethylsiloxan einer Viskosität von ca. 100 mPas bei 20 °C dosiert, welches in einem vorgeschalteten Mischorgan mit Katalysator vorgemischt und auf Reaktionstemperatur aufgeheizt wurde. Reaktionstemperatur, Druck sowie Verweilzeit und Angaben zum erhaltenen klaren und geruchlosen α,ω-Dihydroxypolydimethylsiloxan enthält Tabelle 1.
Die Viskositäten wurden im kontinuierlichen Produktstrom gemessen und auf 20 °C umgerechnet.

**Tabelle 1**

| Bsp. Nr. | Ausgangstoffe | | Reaktionsbedingungen | | | | Endprodukt |
|---|---|---|---|---|---|---|---|
| | Katal. ppm | Neutr.- mittel ppm | Dosier-geschw. kg/h | Temp. °C | Druck mbar | VWZ s | Visk. mPas |
| 1 | 2,5¹⁾ | 5²⁾ | 115 | 135 | 100 | 31 | 1.200 |
| 2 | 4¹⁾ | 8²⁾ | 150 | 140 | 120 | 24 | 65.000 |
| 3 | 4¹⁾ | 8²⁾ | 150 | 140 | 40 | 24 | 1.700.000 |
| 4 | 25³⁾ | 34⁴⁾ | 90 | 120 | 10 | 40 | 3.500 |

| | | | | | | | |
|---|---|---|---|---|---|---|---|
| 1) Phosphornitrilchlorid | | | | | | | |
| 2) Triisooctylamin | | | | | | | |
| 3) Kaliumhydroxid | | | | | | | |
| 4) 85%ige Orthophosphorsäure VWZ: Verweilzeit | | | | | | | |

Die Cyclengehalte im Produkt betrugen bei allen Versuchen weniger als 0,6 Gew.-%.
Die Konstanthaltung der Viskosität erfolgte über ein Prozeßviskosimeter, das den Prozeßparameter Druck regelte. Die Beispiele 2 und 3 zeigen den Übergang von der Viskosität 65.000 mPas auf eine Viskosität von 1.700.000 mPas durch Absenken des Druckes von 120 mbar (abs.) auf 40 mbar (abs.). Innerhalb von 0,5 Minuten wurde die neue Viskositätskonstanz erreicht.

### Beispiel 5

In dem o. g. Dünnschichtverdampfer wurden kontinuierlich 30 kg/h eines α,ω-Dihydroxypolydimethylsiloxanes einer Viskosität von ca. 100 mPas bei 20 °C, 2 kg/h eines α,ω-Bis-Trimethylsiloxypolydimethylsiloxanes einer Viskosität von ca. 50 mPas bei 20 °C und 50 ppm Phosphornitrilchlorid, bezogen auf die Summe der beiden Siloxankomponenten, dosiert. Bei einer Reaktionstemperatur von 140 °C, einem Druck von 50 mbar und einer Verweilzeit von 2 Minuten wurde ein trimethylsiloxyendblockiertes Polydimethylsiloxan mit einer Viskosität von 5 500 mPas erhalten.
Der Katalysator wurde durch Umsetzung mit 100 ppm Triisooctylamin desaktiviert.

### Beispiel 6

In dem o. g. Dünnschichtverdampfer wurden kontinuierlich 30 kg/h eines α,ω-Dihydroxypolydimethylsiloxans mit einer Viskosität von ca. 100 mPas bei 20 °C, 0,7 kg/h eines α,ω-Dimethylvinylsiloxypolydimethylsiloxanes mit einer Viskosität von 20 mPas bei 20 °C und 60 ppm Phosphornitrilchlorid, bezogen auf die Summe der beiden Siloxankomponenten, dosiert. Bei einer Reaktionstemperatur von 150 °C, einem Druck von 50 mbar und einer Verweilzeit von 2 Minuten wurde ein dimethylvinylsiloxy-endblockiertes Polydimethylsiloxan mit einer Viskosität von 25 800 mPas erhalten. Der Katalysator wurde durch Umsetzung mit 120 ppm Triisooctylamin desaktiviert.

## Patentansprüche

1. Kontinuierliches Verfahren zur Herstellung von Polyorganosiloxanen einer Viskosität von 0,2 bis 10 000 Pas (bei 20 °C) durch Reaktion von niedermolekularen Polyorganosiloxanolen miteinander oder mit oligomeren Siloxanen in Gegenwart eines für diese Reaktion bekannten Katalysatorsystems bei Temperaturen zwischen 80 und 200 °C und Drücken von 1 bis 1000 mbar (abs.),
dadurch gekennzeichnet,
daß die Umsetzung in einem Dünnschichtverdampfer durchgeführt wird.

2. Verfahren nach Anspruch 1, dadurch gekennzeichnet, daß niedermolekulare Polyorganosiloxanole miteinander zur Reaktion gebracht werden.

3. Verfahren nach Anspruch 2, dadurch gekennzeichnet, daß niedermolekulare Polyorganosiloxanole in Gegenwart von Kaliumhydroxid als Katalysator bei Temperaturen von weniger als 150 °C miteinander zur Reaktion gebracht werden.

4. Verfahren nach Anspruch 2, dadurch gekennzeichnet, daß niedermolekulare Polyorganosiloxanole in Gegenwart von Phosphornitrilchlorid als Katalysator bei Temperaturen von weniger als 200 °C miteinander zur Reaktion gebracht werden.

5. Verfahren nach Anspruch 1, dadurch gekennzeichnet, daß niedermolekulare Polyorganosiloxanole und oligomere Siloxane miteinander zur Reaktion gebracht werden.

6. Verfahren nach Anspruch 5, dadurch gekennzeichnet, daß niedermolekulare Polyorganosiloxanole und lineare oligomere Siloxane miteinander zur Reaktion gebracht werden.

7. Verfahren nach den Ansprüchen 5 und 6, dadurch gekennzeichnet, daß als Katalysator für die Reaktion Phosphornitrilchlorid eingesetzt wird.

8. Verfahren nach den Ansprüchen 5, 6 und 7, dadurch gekennzeichnet, daß niedermolekulare Polyorganosiloxanole und lineare oligomere Siloxane in Gegenwart von Phosphornitrilchlorid als Katalysator bei Temperaturen von weniger als 200 °C miteinander zur Reaktion gebracht werden.

9. Verfahren nach den Ansprüchen 1 bis 8, dadurch gekennzeichnet, daß die Verweilzeit des Reaktionsgemisches im Dünnschichtverdampfer 0,2 bis 30 Minuten beträgt.

10. Verfahren nach den Ansprüchen 1 bis 9, dadurch gekennzeichnet, daß der Reaktionsdruck mit Hilfe eines Prozeßviskosimeters geregelt wird.

## Claims

1. Continuous process for preparing polyorganosiloxanes having a viscosity of from 0.2 to 10,000 Pas (at 20°C) by reacting low molecular weight polyorganosiloxanols with one another or with oligomeric siloxanes in the presence of a catalyst system known for this reaction at temperatures between 80 and 200°C and pressures of from 1 to 1000 mbar (abs.), characterized in that the reaction is carried out in a thin-film evaporator.

2. Process according to Claim 1, characterized in that low molecular weight polyorganosiloxanols are reacted with one another.

3. Process according to Claim 2, characterized in that low molecular weight polyorganosiloxanols are reacted with one another in the presence of potassium hydroxide as catalyst at temperatures of less than 150°C.

4. Process according to Claim 2, characterized in that low molecular weight polyorganosiloxanols are reacted with one another in the presence of phosphonitrilic chloride as catalyst at temperatures of less than 200°C.

5. Process according to Claim 1, characterized in that low molecular weight polyorganosiloxanols and oligomeric siloxanes are reacted with one another.

6. Process according to Claim 5, characterized in that low molecular weight polyorganosiloxanols and linear oligomeric siloxanes are reacted with one another.

7. Process according to Claims 5 and 6, characterized in that phosphonitrilic chloride is used as catalyst for the reaction.

8. Process according to Claims 5, 6 and 7, characterized in that low molecular weight polyorganosiloxanols and linear oligomeric siloxanes are reacted with one another in the presence of phosphonitrilic chloride as catalyst at temperatures of less than 200°C.

9. Process according to Claims 1 to 8, characterized in that the residence time of the reaction mixture in the thin-film evaporator is from 0.2 to 30 minutes.

10. Process according to Claims 1 to 9, characterized in that the reaction pressure is regulated by means of a process viscometer.

## Revendications

1. Processus continu pour fabriquer des polyorganosiloxanes ayant une viscosité allant de 0,2 jusqu'à 10 000 Pas (à 20°C) en effectuant une réaction uniquement entre polyorganosiloxanoles de faible poids moléculaire ou avec des polyorganosiloxanoles et des siloxanes oligomères en présence d'un système catalyseur connu pour cette réaction à des températures se situant entre 80 et 200°C et avec des pressions allant de 1 jusqu'à 1000 mbar (abs) ; ce processus est caractérisé en ce que la réaction est réalisée dans un vaporisateur à couche mince.

2. Processus selon la revendication 1, caractérisé en ce qu'une réaction est effectuée avec des polyorganosiloxanoles de faible poids moléculaire.

3. Processus selon la revendication 2, caractérisé en ce qu'une réaction est effectuée avec des polyorganosiloxanoles de faible poids moléculaire en présence d'hydroxyde de potassium comme catalyseur à des températures inférieures à 150°C.

4. Processus selon la revendication 2, caractérisé en ce qu'une réaction est effectuée avec des polyorganosiloxanoles de faible poids moléculaire en présence de chlorure phosphonitrilique comme catalyseur à des températures inférieures à 200°C.

5. Processus selon la revendication 1, caractérisé en ce qu'une réaction est effectuée avec des polyorganosiloxanoles de faible poids moléculaire et des siloxanes oligomères.

6. Processus selon la revendication 5, caractérisé en ce qu'une réaction est effectuée avec des polyorganosiloxanoles de faible poids moléculaire et des siloxanes oligomères linéaires.

7. Processus selon les revendications 5 et 6, caractérisé en ce que du chlorure phosphonitrilique est utilisé comme catalyseur pour la réaction.

8. Processus selon les revendications 5, 6 et 7, caractérisé en ce qu'une réaction est effectuée avec des polyorganosiloxanoles de faible poids moléculaire et des siloxanes oligomères linéaires en présence de chlorure phosphonitrilique comme catalyseur à des températures inférieures à 200°C.

9. Processus selon les revendications 1 à 8, caractérisé en ce que le temps de séjour du mélange de la réaction dans le vaporisateur à couche mince est de 0,2 à 30 minutes.

10. Processus selon les revendications 1 à 9, caractérisé en ce que la pression de la réaction est réglée à l'aide d'un viscosimètre pour opérations chimiques.
